# EUROPEAN PATENT APPLICATION

(11) **EP 4 797 344 A1**
(43) Date of publication of application: **26.08.2026**
(21) Application number: 24937593.2
(22) Date of filing: 22.08.2024
(51) Int. Cl.: H01M 4/136, H01M 4/58, H01M 10/058, H01M 10/0525

(54) **LITHIUM-ION BATTERY AND ELECTRICAL APPARATUS**

(30) Priority: 30.04.2024 CN 202410537248
(71) Applicant: Contemporary Amperex Technology Co., Limited, Ningde, Fujian 352100 (CN)
(72) Inventor: WU, Kai, Ningde, Fujian 352100 (CN); WU, Zirui, Ningde, Fujian 352100 (CN); JIN, Chao, Ningde, Fujian 352100 (CN); YE, Yonghuang, Ningde, Fujian 352100 (CN); DAI, Zhipeng, Ningde, Fujian 352100 (CN); ZHENG, Shibing, Ningde, Fujian 352100 (CN); YAN, Guanfusheng, Ningde, Fujian 352100 (CN)
(74) Representative: Ziebig Hengelhaupt Intellectual Property Attorneys Patentanwaltskanzlei PartGmbB
(86) International application number: PCT/CN2024/114027
(87) International publication number: WO 2025/227562

(57) **Abstract**

A battery cell, a battery, an electrical apparatus, and a battery cell core, belonging to the technical field of batteries. When the length-width ratio m of a positive electrode sheet satisfies 1 ≤ m ≤ 6 and the compaction density ρ of a positive electrode active material layer satisfies 3.3 g/cm³ ≤ ρ ≤ 3.7 g/cm³, the mass ratio of single-crystal particles of the positive electrode active material is controlled to be no less than 50%, and the porosity of the positive electrode active material layer is controlled to be 23% to 33%. Since single-crystal particles are less prone to fracture during cold pressing and long-term charging/discharging processes, excessive active specific surface area is not exposed compared to polycrystalline particles, thereby reducing side reactions with an electrolyte and reducing the increase of positive electrode impedance in a battery. Moreover, the occurrence of the situation in which an effective conductive network cannot be established at a new interface due to material particle fracture is reduced, so that the phenomenon of local potential increase caused by a particle "island" formed by the positive electrode active material is prevented, thereby achieving mitigation of the DCR in a battery cell core and mitigation of the electrode sheet resistance of a high-energy-density battery cell core.

## Description

### CROSS-REFERENCE

The present application claims priority to Chinese Patent Application No. 2024105372485, filed on April 30, 2024 and entitled "BATTERY CELL, BATTERY, ELECTRIC DEVICE, AND CELL", which is incorporated herein by reference.

### TECHNICAL FIELD

The present application relates to the technical field of batteries, and in particular, to a lithium-ion battery and an electric device.

### BACKGROUND

In a stacked battery cell with a large aspect ratio and high compaction density of the electrode plate, affected by the length of the electrode plate, the internal structure of the electrode plate, and a conductive network, the positive electrode plate, during the use of the battery cell, may exhibit uneven current distribution, relatively high resistance, and deterioration of kinetic performance.

### SUMMARY

In view of the above problems, the present application provides a lithium-ion battery and an electric device, which can mitigate the problem of relatively large resistance of an electrode plate in a cell having a high energy density.

In a first aspect, the present application provides a lithium-ion battery, where the lithium-ion battery includes positive electrode plates, an aspect ratio m of each positive electrode plate satisfies 1 ≤ m ≤ 6, the positive electrode plate includes a positive electrode active material layer, a compaction density ρ of the positive electrode active material layer satisfies 3.3 g/cm³ ≤ ρ ≤ 3.7 g/cm³, the positive electrode active material layer includes a positive electrode active material, the positive electrode active material includes single crystal particles, a mass proportion of the single crystal particles in the positive electrode active material is not less than 50%, and a porosity of the positive electrode active material layer ranges from 23% to 33%.

In the technical solutions of the embodiments of the present application, when the aspect ratio m of the positive electrode plate satisfies 1 ≤ m ≤ 6 and the compaction density ρ of the positive electrode active material layer satisfies 3.3 g/cm³ ≤ ρ ≤ 3.7 g/cm³, the mass proportion of the single crystal particles in the positive electrode active material is controlled to be not less than 50%. Since the single crystal particles are less prone to fracture during cold pressing and long-term charging and discharging process, compared with polycrystalline particles, the single crystal particles will not expose excessive active specific surface area, thereby reducing the side reaction with an electrolytic solution and reducing the increase in the impedance of the positive electrode of the battery. In addition, the occurrence of new interfaces generated by the fracture of material particles failing to establish an effective conductive network is reduced, and the phenomenon of local potential increase caused by the formation of particle "islands" of the positive electrode active material is avoided, thereby reducing the DCR in the cell and reducing the resistance of the electrode plate in the cell having the high energy density.

In some embodiments, the aspect ratio m of the positive electrode plate and the compaction density ρ of the positive electrode active material layer in units of g/cm³ satisfy m × ρ ≥ 3.

In the above implementation process, when the product of the aspect ratio of the positive electrode plate and the compaction density of the positive electrode active material layer is greater than 3, the mass proportion of the single crystal particles in the positive electrode active material is controlled to be not less than 50%. Since the single crystal particles are less prone to fracture during cold pressing and long-term charging and discharging process, compared with the polycrystalline particles, the single crystal particles will not expose excessive active specific surface area, thereby reducing the side reaction with the electrolytic solution and reducing the increase in the impedance of the positive electrode of the battery. In addition, the occurrence of new interfaces generated by the fracture of material particles failing to establish an effective conductive network is reduced, and the phenomenon of local potential increase caused by the formation of particle "islands" of the positive electrode active material is avoided, thereby reducing the DCR in the cell and reducing the resistance of the electrode plate in the cell having the high energy density.

In some embodiments, the aspect ratio m of the positive electrode plate and the compaction density ρ of the positive electrode active material layer in units of g/cm³ satisfy 3 ≤ m × ρ < 5, the positive electrode active material includes the single crystal particles and the polycrystalline particles, and a mass proportion of the polycrystalline particles in the positive electrode active material is less than or equal to 50%.

In the above implementation process, when the aspect ratio m of the positive electrode plate and the compaction density ρ of the positive electrode active material layer in units of g/cm³ satisfy 3 ≤ m × ρ < 5, the resistance of the electrode plate can still be effectively reduced in the case where a certain amount of polycrystalline particles is used. The single crystal particles and the polycrystalline particles are used in combination, and the usage proportion of the single crystal particles is controlled to be greater than that of the polycrystalline particles, such that the resistance of the electrode plate can be effectively reduced. In addition, the performance of the polycrystalline particles can also be exerted while maintaining the rate capability of the positive electrode plate. Moreover, the size of the polycrystalline particle is usually greater than that of the single crystal particle. The combined use of the two achieves the matching of large and small particle sizes, thereby helping improve the compaction density and increasing the energy density.

In some embodiments, the aspect ratio m of the positive electrode plate and the compaction density ρ of the positive electrode active material layer in units of g/cm³ satisfy 3 ≤ m × ρ < 5, the positive electrode active material includes the single crystal particles and the polycrystalline particles, and a mass proportion of the polycrystalline particles in the positive electrode active material is less than or equal to 30%.

In the above implementation process, when the aspect ratio m of the positive electrode plate and the compaction density ρ of the positive electrode active material layer in units of g/cm³ satisfy 3 ≤ m × ρ < 5, further reducing the use of the polycrystalline particles is more beneficial to reducing the resistance of the electrode plate.

In some embodiments, the aspect ratio m of the positive electrode plate and the compaction density ρ of the positive electrode active material layer in units of g/cm³ satisfy that m × ρ ≥ 5, and the positive electrode active material is a single crystal particle.

In the above implementation process, when the aspect ratio m of the positive electrode plate and the compaction density ρ of the positive electrode active material layer in units of g/cm³ satisfy m × ρ ≥ 5, the exclusive use of the single crystal particles as the positive electrode active material enables effective control of the resistance of the positive electrode plate.

In some embodiments, the aspect ratio m of the positive electrode plate and the compaction density ρ of the positive electrode active material layer in units of g/cm³ satisfy that 15 ≥ m × ρ ≥ 5, and the positive electrode active material is a single crystal particle.

In the above implementation process, the exclusive use of the single crystal particles as the positive electrode active material is particularly beneficial to reducing the resistance of the positive electrode plate having the aspect ratio m and the compaction density ρ of the positive electrode active material layer in units of g/cm³ that satisfy 15 ≥ m × ρ ≥ 5.

In some embodiments, the lithium-ion battery further includes positive electrode tabs, each positive electrode plate is connected to at least one positive electrode tab, and a total length W1 of a joint between a single positive electrode plate and at least one corresponding positive electrode tab and a width W of the positive electrode plate satisfy: W ≤ W1.

In the above implementation process, the longer the total length of the joint between the positive electrode plate and the positive electrode tab correspondingly connected to the positive electrode plate, the more conducive it is to the current passage capacity of the positive electrode plate. The total length W1 of the joint between the single positive electrode plate and the at least one positive electrode tab and the width W of the positive electrode plate are controlled to satisfy: W ≤ W1, such that the positive electrode plate exhibits a sufficient current passage capacity, which is conducive to the uniform distribution of the current density of the positive electrode plate, thereby reducing the resistance of the positive electrode plate.

In some embodiments, the lithium-ion battery further includes a shell body, and a relationship between a total thickness T1 of positive electrode active material layers of all positive electrode plates in the lithium-ion battery and a width W2 of an inner cavity of the shell body satisfies that T1:W2 ranges from 35% to 45%; and/or
the positive electrode plate includes a positive electrode current collector, and a thickness of the positive electrode current collector is greater than or equal to 8 µm.

In the above implementation process, the relationship between the total thickness T1 of the positive electrode active material layers of all the positive electrode plates and the width W2 of the inner cavity of the shell body is controlled to satisfy that T1:W2 ranges from 35% to 45% and the thickness of the positive electrode current collector is greater than or equal to 8 µm, such that the battery can have a good energy density while ensuring that the positive electrode plates have low resistance.

In some embodiments, a porosity of the positive electrode active material layer ranges from 23% to 33%.

In the above implementation process, the porosity of the positive electrode active material layer is controlled to range from 23% to 33%, such that the wettability of the positive electrode plate when applied as the battery is improved, and the electrochemical polarization of the positive electrode plate is reduced, thereby improving the kinetic performance of the positive electrode plate and reducing the resistance of the positive electrode plate.

In some embodiments, the positive electrode active material includes LiₓNiₐCo_{b}M_{c}O_{2-y}A_{y}, x ranges from 0.2 to 1.2, 0.8 ≤ a < 1, 0 ≤ b ≤ 0.2, a + b + c = 1, 0 ≤ y < 0.2, M includes Al and/or Mn, and A includes at least one of S, N, F, Cl, Br, and I.

In the above implementation process, a good compaction density helps improve the energy density of the battery. In addition, the ternary system material with a high nickel content has a high true density, such that the use of the ternary material system as the positive electrode active material helps improve the energy density of the battery. In addition, the ternary system material having a nickel content of 0.8 ≤ a < 1 exhibits a high specific capacity, such that the specific capacity of the positive electrode active material layer can also be effectively improved.

In some embodiments, a mass content of Ni on a surface of the single crystal particles is lower than a mass content of Ni inside the single crystal particles; and/or
the positive electrode active material includes polycrystalline particles, and a mass content of Ni on a surface of primary particles in the polycrystalline particles is lower than a mass content of Ni inside the primary particles.

In the above implementation process, a gradient Ni content design is performed on the primary particles of the single crystal particles and/or the polycrystalline particles, such that the Ni content proximal to the surface of the particles is lower, thereby reducing interfacial side reactions, while the Ni content proximal to the inside of the particles is higher, which is conducive to the capacity performance of the particles.

In some embodiments, the single crystal particles include large single crystal particles and small single crystal particles, a median particle size Dv50 of the large single crystal particles ranges from 5 µm to 10 µm, and a median particle size Dv50 of the small single crystal particles ranges from 1 µm to 3.5 µm; and/or
a particle size distribution SPAN value of the single crystal particles ranges from 1.0 to 2.0; and/or
a Dv2 of the single crystal particles is greater than 0.7 µm.

In the above implementation process, the combination of the large single crystal particles and the small single crystal particles can help improve the compaction density of the positive electrode plate, especially the compaction density of the positive electrode plate in the case of pure single crystal particles, thereby enabling the battery to have a higher energy density. The particle size distribution SPAN value of the single crystal particles is controlled to range from 1.0 to 2.0, and the Dv2 of the single crystal particles is controlled to be greater than 0.7 µm, such that during the preparation process of the positive electrode plate, the slurry of the positive electrode active material has better stability and is less likely to generate gel, and the single crystal particle has a strong dispersion capability. This is conducive to the uniform distribution of the positive electrode active material and a conductive agent in the prepared positive electrode active material layer, thereby forming a better conductive network.

In some embodiments, the lithium-ion battery further includes negative electrode plates, each negative electrode plate includes a negative electrode active material layer, the negative electrode active material layer includes graphite and a silicon material, and a mass of the silicon material accounts for 5% to 15% of a mass of the graphite.

In the above implementation process, the silicon material exhibits a high specific capacity, and the total weight of active substances of the negative electrode can be effectively reduced by doping the silicon material into the negative electrode active material layer. Compared with the negative electrode having a pure graphite system, the weight per unit area of the silicon-doped negative electrode plate is significantly reduced, the thickness of the negative electrode plate is reduced, and the kinetic performance is improved, thereby reducing the resistance of the negative electrode plate and also improving the energy density of the battery.

In some embodiments, the silicon material includes at least one of silicon oxide, silicon-carbon composite, and pre-lithiated silicon; and/or
a median particle size Dv50 of the silicon material ranges from 6 µm to 15 µm.

In the above implementation process, the median particle size Dv50 of the silicon material is controlled to range from 6 µm to 15 µm, such that the diffusion path of lithium ions can be effectively shortened, thereby reducing the resistance of the negative electrode plate.

In some embodiments, the negative electrode plate includes a negative electrode current collector, the negative electrode active material layer is attached to the negative electrode current collector, the negative electrode active material layer includes a first negative electrode active material layer and a second negative electrode active material layer, the first negative electrode active material layer is disposed between the negative electrode current collector and the second negative electrode active material layer, and the silicon material is provided in the second negative electrode active material layer; and/or
a compaction density of the negative electrode active material layer is less than or equal to 1.70 g/cm³.

In the above implementation process, the silicon material is entirely placed in an outer layer, such that the silicon material can increase the porosity of the negative electrode plate. In addition, particles of the silicon material in an upper layer can preferentially intercalate lithium, thereby effectively shortening the transport path of Li⁺ and reducing the concentration polarization of the negative electrode plate. The compaction density of the negative electrode active material layer is controlled to be less than or equal to 1.70 g/cm³, such that the negative electrode plate has a good porosity, thereby effectively increasing the conduction path of lithium ions, enhancing the kinetics of the negative electrode plate, and reducing the resistance.

In a second aspect, the present application provides a lithium-ion battery, where the lithium-ion battery includes positive electrode plates, positive electrode tabs, a shell body, and negative electrode plates, each positive electrode plate includes a positive electrode active material layer, the positive electrode active material layer includes a positive electrode active material, an aspect ratio m of the positive electrode plate and a compaction density ρ of a positive electrode active material layer in units of g/cm³ satisfy m × ρ ≥ 3, the positive electrode active material includes single crystal particles, and a mass proportion of the single crystal particles in the positive electrode active material is not less than 50%; each positive electrode plate is connected to at least one positive electrode tab, and a total length W1 of a joint between a single positive electrode plate and at least one positive electrode tab and a width W of a positive electrode plate satisfy: W ≤ W1; a relationship between a total thickness T1 of positive electrode active material layers of all positive electrode plates in the lithium-ion battery and a width W2 of an inner cavity of the shell body satisfies that T1:W2 ranges from 35% to 45%; each negative electrode plate includes a negative electrode active material layer, the negative electrode active material layer includes graphite and a silicon material, and the silicon material accounts for 5% to 15% of the graphite.

In the technical solutions of the embodiments of the present application, when the product of the aspect ratio of the positive electrode plate and the compaction density of the positive electrode active material layer is greater than 3, the mass proportion of the single crystal particles in the positive electrode active material is controlled to be not less than 50%. Since the single crystal particles are less prone to fracture during cold pressing and long-term charging and discharging process, the use of more single crystal particles helps reduce the possibility of the positive electrode active material undergoing side reactions, thereby reducing the occurrence of loss of the conductive network in the positive electrode active material layer and local potential increase caused by the formation of particle "islands", and reducing the resistance of the electrode plate. The total length W1 of the joint between the single positive electrode plate and the at least one positive electrode tab and the width W of the positive electrode plate are controlled to satisfy: W ≤ W1, such that the positive electrode plate exhibits a sufficient current passage capacity, which is conducive to the uniform distribution of the current density of the positive electrode plate, thereby reducing the resistance of the positive electrode plate. The relationship between the total thickness T1 of the positive electrode active material layers of all the positive electrode plates and the width W2 of the inner cavity of the shell body is controlled to satisfy that T1:W2 ranges from 35% to 45% and the thickness of the positive electrode current collector is greater than or equal to 8 µm, such that the battery can have a good energy density while ensuring that the positive electrode plates have low resistance.

In a third aspect, the present application provides an electric device, where the electric device includes the lithium-ion battery according to the first aspect or the second aspect.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a schematic structural diagram of a vehicle according to some embodiments of the present application;
FIG. 2 is a schematic diagram of an exploded structure of a secondary battery according to some embodiments of the present application;
FIG. 3 is a schematic structural diagram of a battery cell according to some embodiments of the present application;
FIG. 4 is an exploded view of a battery cell according to some embodiments of the present application;
FIG. 5 is a schematic structural diagram of an electrode assembly according to some embodiments of the present application;
FIG. 6 is a schematic diagram of a first structure of a positive electrode plate according to some embodiments of the present application;
FIG. 7 is a schematic diagram of a second structure of a positive electrode plate according to some embodiments of the present application;
FIG. 8 is a schematic diagram of a third structure of a positive electrode plate according to some embodiments of the present application;
FIG. 9 is a schematic diagram of a first structure of a negative electrode plate according to some embodiments of the present application;
FIG. 10 is a schematic diagram of a second structure of a negative electrode plate according to some embodiments of the present application; and
FIG. 11 is a flowchart of a method for preparing a positive electrode plate according to some embodiments of the present application.

### Reference numerals in the detailed description are as follows:

1000-vehicle; 100-secondary battery; 200-motor; 300-controller; 10-case; 11-accommodating space; 12-first portion; 13-second portion; 20-battery cell; 21-shell; 211-opening; 22-end cover assembly; 221-end cover; 222-electrode terminal; 23-electrode assembly; 231-positive electrode plate; 2311-positive electrode current collector; 2312-positive electrode active material layer; 2313-positive electrode tab; 232-negative electrode plate; 2321-negative electrode current collector; 2322-negative electrode active material layer; 2322a-first negative electrode active material layer; 2322b-second negative electrode active material layer; 233-separator; 24-current collecting member; 25-insulation protective member.

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

The power batteries may be lithium-ion batteries, and the lithium-ion batteries are extensively applied in fields such as portable electronic devices and electric vehicles. The larger the aspect ratio of the battery electrode, the more beneficial it is to improving the grouping efficiency of the module/battery pack, thereby enabling the module/battery pack to have a higher state of charge. In addition, the higher the compaction density of the battery electrode plate, the more conducive it is to the capacity of the battery. In order to pursue better performance, at present, the electrode plate of the battery has a large aspect ratio and high compaction density. However, the larger the aspect ratio of the electrode plate, the more likely problems such as uneven current/potential and high resistance are to occur in a length direction of the electrode plate, and a larger coating thickness and a higher compaction density of the electrode plate may lead to the deterioration of the kinetic performance of the system.

Based on the above consideration, in order to achieve the effect of improving the resistance of the electrode plate, the present application provides a lithium-ion battery. The lithium-ion battery includes positive electrode plates, each positive electrode plate includes a positive electrode active material layer, and the positive electrode active material layer includes a positive electrode active material. An aspect ratio m of the positive electrode plate and a compaction density ρ of the positive electrode active material layer in units of g/cm³ satisfy m × ρ ≥ 3. The positive electrode active material includes single crystal particles, and a mass proportion of the single crystal particles in the positive electrode active material is not less than 50%.

In such a lithium-ion battery, when the product of the aspect ratio of the positive electrode plate and the compaction density of the positive electrode active material layer is greater than 3, that is, when the aspect ratio is large, the compaction density is large, or both the aspect ratio and the compaction density are large, the mass proportion of the single crystal particles in the positive electrode active material is controlled to be not less than 50%. Since the single crystal particles are less prone to fracture during cold pressing and long-term charging and discharging process, compared with polycrystalline particles, the single crystal particles will not expose excessive active specific surface area, thereby reducing the side reaction with an electrolytic solution and reducing the increase in the impedance of the positive electrode of the battery. In addition, the occurrence of new interfaces generated by the fracture of material particles failing to establish an effective conductive network is reduced, and the phenomenon of local potential increase caused by the formation of particle "islands" of the positive electrode active material is avoided, thereby reducing the DCR in the cell and reducing the resistance of the electrode plate.

The lithium-ion battery may, but is not limited to, be used in electric devices such as vehicles, ships, or aircraft.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of explanation, the following embodiments are described by taking a vehicle 1000 as an example of the electric device according to an embodiment of the present application.

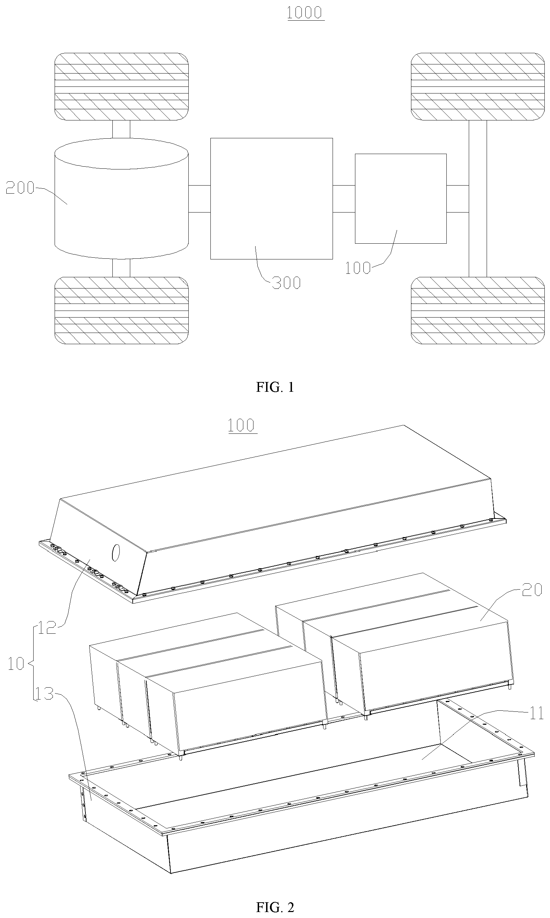

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A secondary battery 100 is provided inside the vehicle 1000, and the secondary battery 100 may be provided at the bottom, the head, or the tail of the vehicle 1000. The secondary battery 100 may be used for powering the vehicle 1000. For example, the secondary battery 100 may serve as an operation power source for the vehicle 1000. The vehicle 1000 may further include a controller 300 and a motor 200. The controller 300 is configured to control the secondary battery 100 to power the motor 200, e.g., for operation power needed by the vehicle 1000 for start-up, navigation, and driving.

In some embodiments of the present application, the secondary battery 100 may not only serve as the operation power source for the vehicle 1000, but also as a driving power source for the vehicle 1000 to, replacing or partially replacing fuel or natural gas, provide driving power for the vehicle 1000.

In the present application, the secondary battery 100 may refer to a single battery cell 20, or may refer to a single physical module including a plurality of battery cells 20 to provide a higher voltage and capacity, which may be in the form of a battery pack, a battery module, or the like. The secondary battery 100 may include a case 10 for encapsulating the plurality of battery cells 20, and the case 10 can prevent liquid or other foreign matter from affecting the charging or discharging of the battery cells 20.

FIG. 2 is a schematic diagram of an exploded structure of the secondary battery 100 according to some embodiments of the present application. Referring to FIG. 2, the secondary battery 100 includes the case 10 and the battery cells 20. The battery cells 20 are accommodated in the case 10.

The case 10 is configured to provide an accommodating space 11 for the battery cells 20. In some embodiments, the case 10 may include a first portion 12 and a second portion 13. The first portion 12 and the second portion 13 are mutually lidded with each other to define the accommodating space 11 for accommodating the battery cell 20. Certainly, a joint between the first portion 12 and the second portion 13 may be sealed by a sealing member (not shown in the figure). The sealing member may be a seal ring, a sealant, or the like.

The first portion 12 and the second portion 13 may be in various shapes, such as a rectangular parallelepiped and a cylinder. The first portion 12 may be of a hollow structure with one side open so as to form an accommodating cavity for accommodating the battery cells 20, the second portion 13 may also be of a hollow structure with one side open so as to form an accommodating cavity for accommodating the battery cells 20, and the open side of the first portion 12 is lidded with the open side of the second portion 13 to form the case 10 having the accommodating space 11. Certainly, as shown in FIG. 2, alternatively, the first portion 12 may be of a hollow structure with one side open, the second portion 13 may be of a plate-shaped structure, and the open side of the first portion 12 is lidded with the second portion 13 to form the case 10 having the accommodating space 11.

In the secondary battery 100, there are a plurality of battery cells 20, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that the plurality of battery cells 20 are first connected in series, in parallel, or in series-parallel to form battery modules, and then the plurality of battery modules are connected in series, in parallel, or in series-parallel to form a whole and accommodated in the case 10. The battery cell 20 may be cylindrical, flat, rectangular parallelepiped-shaped, or in other shapes. FIG. 2 illustratively shows the case where the battery cell 20 is square.

In some embodiments, the secondary battery 100 may further include a busbar component (not shown in the figure). The plurality of battery cells 20 may be electrically connected to each other by means of the busbar component to achieve series connection, parallel connection, or series-parallel connection among the plurality of battery cells 20.

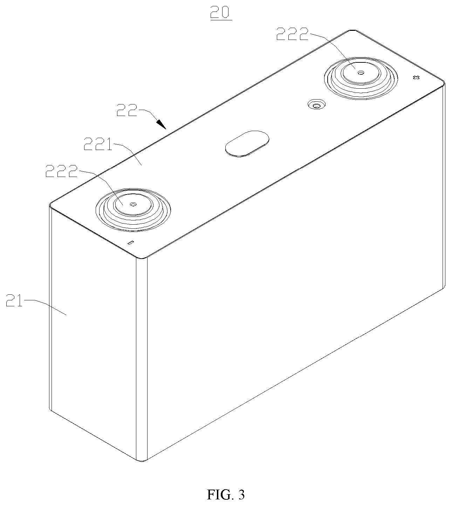

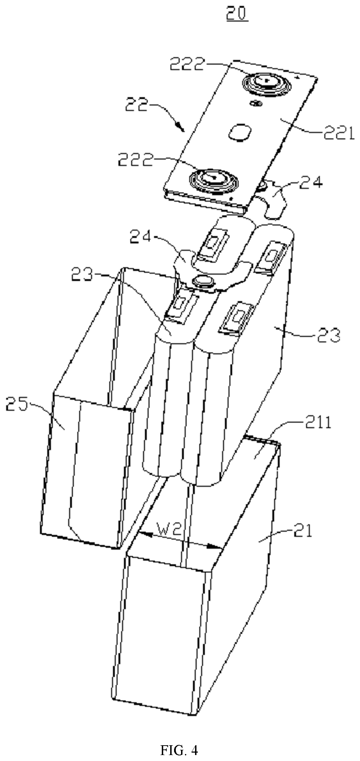

FIG. 3 is a schematic structural diagram of the battery cell 20 according to some embodiments of the present application; FIG. 4 is an exploded view of the battery cell 20 according to some embodiments of the present application. Referring to FIGs. 3 and 4, the battery cell 20 may include a shell 21, an end cover assembly 22, and an electrode assembly 23. The shell 21 is provided with an opening 211, the electrode assembly 23 is accommodated in the shell 21, and the end cover assembly 22 is configured to cover the opening 211.

The shape of the shell 21 may be determined according to the specific shape of the electrode assembly 23. For example, if the electrode assembly 23 is of a rectangular parallelepiped structure, the shell 21 may be of a rectangular parallelepiped structure. FIGs. 3 and 4 illustratively show the case where the shell 21 and the electrode assembly 23 are square.

The shell 21 may also be made of a plurality of materials, such as copper, iron, aluminum, stainless steel, and aluminum alloy, which is not specifically limited in the embodiments of the present application.

The end cover assembly 22 includes an end cover 221 and an electrode terminal 222. The end cover assembly 22 is configured to cover the opening 211 of the shell 21 to form a sealed mounting space (not shown in the figure). The mounting space is used for accommodating the electrode assembly 23. The mounting space is also used for accommodating an electrolyte, such as an electrolytic solution. The end cover assembly 22 serves as a component for outputting electric energy of the electrode assembly 23, and the electrode terminal 222 in the end cover assembly 22 is configured to be electrically connected to the electrode assembly 23; that is, the electrode terminal 222 is electrically connected to a tab of the electrode assembly 23. For example, the electrode terminal 222 is connected to the tab by means of a current collecting member 24 to achieve an electrical connection between the electrode terminal 222 and the tab.

It should be noted that one or two openings 211 of the shell 21 may be provided. If one opening 211 of the shell 21 is provided, one end cover assembly 22 may also be provided, and two electrode terminals 222 may be provided in the end cover assembly 22. The two electrode terminals 222 are configured to be electrically connected to a positive electrode tab 2313 and a negative electrode tab of the electrode assembly 23, respectively. If two openings 211 of the shell 21 are provided, for example, if the two openings 211 are disposed on two opposite sides of the shell 21, two end cover assemblies 22 may also be provided, and the two openings 211 of the shell 21 are lidded with the two end cover assemblies 22, respectively. In this case, the electrode terminal 222 in one end cover assembly 22 may be a positive electrode terminal 222 for electrical connection to the positive electrode tab 2313 of the electrode assembly 23; the electrode terminal 222 in the other end cover assembly 22 may be a negative electrode terminal 222 for electrical connection to the negative electrode plate 232 of the electrode assembly 23.

In some embodiments, as shown in FIG. 4, the battery cell 20 may further include an insulation protective member 25 fixed to the outer periphery of the electrode assembly 23. The insulation protective member 25 is configured to insulate and isolate the electrode assembly 23 from the shell 21. Illustratively, the insulation protective member 25 is an adhesive tape bonded to the outer periphery of the electrode assembly 23. In some embodiments, there are a plurality of electrode assemblies 23. The insulation protective member 25 is disposed in an enclosing manner around the outer peripheries of the plurality of electrode assemblies 23, and the plurality of electrode assemblies 23 are formed into an integral structure to maintain the structural stability of the electrode assemblies 23.

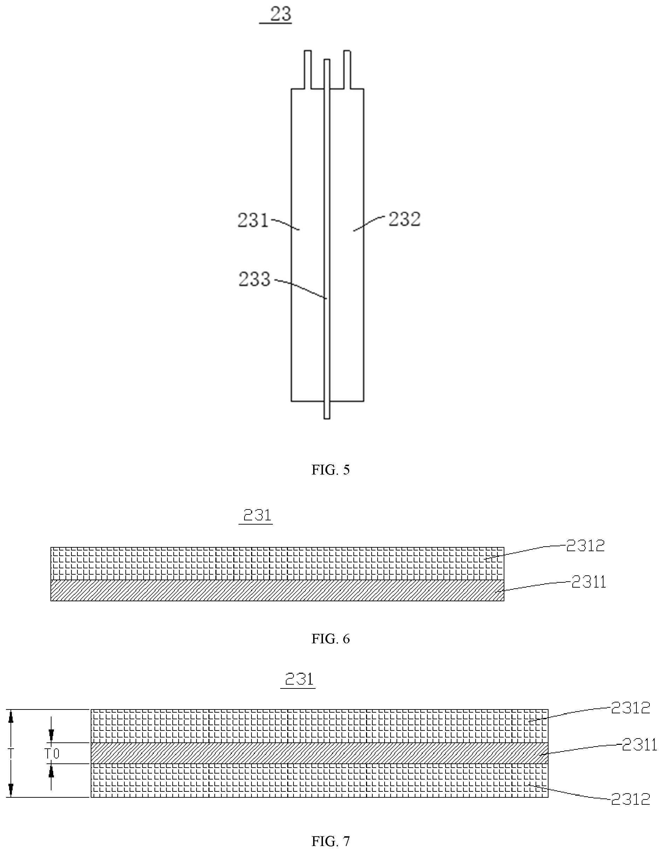

As shown in FIG. 5, the electrode assembly 23 includes a positive electrode plate 231, a negative electrode plate 232, and a separator 233. The positive electrode plate 231 includes a positive electrode current collector 2311 and a positive electrode active material layer 2312. The positive electrode active material layer 2312 is applied on the surface of the positive electrode current collector 2311. The positive electrode current collector 2311 not coated with the positive electrode active material layer 2312 protrudes from the positive electrode current collector 2311 coated with the positive electrode active material layer 2312. The positive electrode current collector 2311 not coated with the positive electrode active material layer 2312 serves as the positive electrode tab 2313.

The negative electrode plate 232 includes a negative electrode current collector 2321 and a negative electrode active material layer 2322. The negative electrode active material layer 2322 is applied on the surface of the negative electrode current collector 2321. The negative electrode current collector 2321 not coated with the negative electrode active material layer 2322 protrudes from the negative electrode current collector 2321 coated with the negative electrode active material layer 2322. The negative electrode current collector 2321 not coated with the negative electrode active material layer 2322 serves as the negative electrode tab. The negative electrode current collector 2321 may be made of copper, and the negative electrode active material may be carbon, silicon, or the like. To ensure the passing of a large current without fusing, a plurality of positive electrode tabs 2313 are provided and stacked together, and a plurality of negative electrode tabs are provided and stacked together. The separator 233 may be made of polypropylene (PP), polyethylene (PE), or the like. In addition, the electrode assembly 23 may be a stacked electrode assembly, but the embodiments of the present application are not limited thereto.

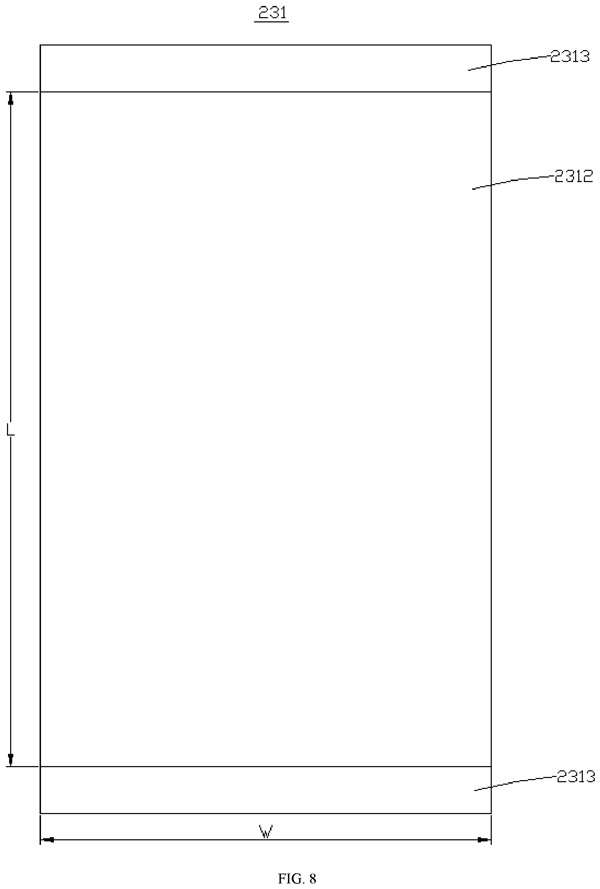

FIG. 3 is a schematic structural diagram of a lithium-ion battery cell according to some embodiments of the present application. Referring to FIG. 3, the embodiments of the present application provide a lithium-ion battery. The lithium-ion battery includes positive electrode plates 231, and an aspect ratio m of each positive electrode plate satisfies 1 ≤ m ≤ 6. FIG. 6 is a schematic diagram of a first structure of the positive electrode plate 231 according to some embodiments of the present application, FIG. 7 is a schematic diagram of a second structure of the positive electrode plate 231 according to some embodiments of the present application, and FIG. 8 is a schematic diagram of a third structure of the positive electrode plate 231 according to some embodiments of the present application. Referring to FIGs. 6, 7, and 8, the positive electrode plate 231 includes the positive electrode active material layer 2312, and a compaction density ρ of the positive electrode active material layer 2312 satisfies 3.3 g/cm³ ≤ ρ ≤ 3.7 g/cm³. The positive electrode active material layer 2312 includes a positive electrode active material, the positive electrode active material includes single crystal particles, and a mass proportion of the single crystal particles in the positive electrode active material is not less than 50%.

The positive electrode active material layer 2312 is attached to at least part of the surface of the positive electrode current collector 2311, and the positive electrode current collector 2311 may be made of one or more of aluminum, aluminum alloy, nickel, nickel alloy, titanium, titanium alloy, silver, and silver alloy. Referring further to FIG. 6, in one embodiment, one surface of the positive electrode current collector 2311 is provided with a positive electrode active material layer 2312; referring further to FIG. 7, in another embodiment, two surfaces of the positive electrode current collector 2311 are both provided with positive electrode active material layers 2312.

For the lithium-ion battery, the positive electrode active material in the positive electrode active material layer 2312 refers to a substance capable of intercalating and deintercalating lithium ions.

When the battery is of a stacked design, the aspect ratio m of the positive electrode plate 231 is calculated based on any one of the positive electrode plates. If a heterogeneous structure exists, the aspect ratios of the plurality of positive electrode plates are measured and averaged. The aspect ratio m of the positive electrode plate 231 may be calculated based on the length L of the positive electrode plate 231 and the width W of the positive electrode plate 231, and the calculation method may be m = L/W. It should be noted that the measurement of L and W does not include the tab portion. The compaction density ρ of the positive electrode active material layer 2312 may be calculated based on the weight per unit area C (mg/cm²) of the positive electrode active material layer 2312, the thickness T (µm) of the positive electrode plate 231, and the thickness T0 (µm) of the current collector, and the calculation method may be ρ = C/(T - T0).The product m × ρ of the aspect ratio m of the positive electrode plate 231 and the compaction density ρ of the positive electrode active material layer 2312 in units of g/cm³ refers to a value obtained by multiplying values of the aspect ratio and the compaction density.

The single crystal particle refers to a single particle with no or little agglomeration.

For the test of the mass proportion of the single crystal particles in the positive electrode active material in the positive electrode plate, non-destructive scanning may be performed on the multi-layer electrode plate by using a micro-CT to obtain a microscopic image, and an average value may be calculated based on the area proportions of the single crystal particles and the polycrystalline particles in the image. The calculated average value may be regarded as the proportion of the single crystal particles to the polycrystalline particles.

When the aspect ratio m of the positive electrode plate 231 satisfies 1 ≤ m ≤ 6 and the compaction density ρ of the positive electrode active material layer 2312 satisfies 3.3 g/cm³ ≤ ρ ≤ 3.7 g/cm³, the mass proportion of the single crystal particles in the positive electrode active material is controlled to be not less than 50%. Since the single crystal particles are less prone to fracture during cold pressing and long-term charging and discharging process, compared with the polycrystalline particles, the single crystal particles will not expose excessive active specific surface area, thereby reducing the side reaction with an electrolytic solution and reducing the increase in the impedance of the positive electrode of the battery. In addition, the occurrence of new interfaces generated by the fracture of material particles failing to establish an effective conductive network is reduced, and the phenomenon of local potential increase caused by the formation of particle "islands" of the positive electrode active material is avoided, thereby reducing the DCR in the cell and reducing the resistance of the electrode plate in a cell having a high energy density.

Illustratively, when the aspect ratio m of the positive electrode plate satisfies 1 ≤ m ≤ 6 and the compaction density ρ of the positive electrode active material layer satisfies 3.3 g/cm³ ≤ ρ ≤ 3.7g/cm³, the mass proportion of the single crystal particles in the positive electrode active material may be 50%, 55%, 60%, 65%, 70%, 75%, 80%, 85%, 90%, 95%, 100%, or the like, and may also be any value within a range not less than 50%.

In the technical solutions of some embodiments of the present application, the aspect ratio m of the positive electrode plate and the compaction density ρ of the positive electrode active material layer in units of g/cm³ satisfy m × ρ ≥ 3.

When the product of the aspect ratio of the positive electrode plate and the compaction density of the positive electrode active material layer is greater than 3, the mass proportion of the single crystal particles in the positive electrode active material is controlled to be not less than 50%. Since the single crystal particles are less prone to fracture during cold pressing and long-term charging and discharging process, compared with the polycrystalline particles, the single crystal particles will not expose excessive active specific surface area, thereby reducing the side reaction with the electrolytic solution and reducing the increase in the impedance of the positive electrode of the battery. In addition, the occurrence of new interfaces generated by the fracture of material particles failing to establish an effective conductive network is reduced, and the phenomenon of local potential increase caused by the formation of particle "islands" of the positive electrode active material is avoided, thereby reducing the DCR in the cell and reducing the resistance of the electrode plate in the cell having the high energy density.

In the technical solutions of some embodiments of the present application, the aspect ratio m of the positive electrode plate 231 and the compaction density ρ of the positive electrode active material layer 2312 in units of g/cm³ satisfy 3 ≤ m × ρ < 5, the positive electrode active material includes the single crystal particles and the polycrystalline particles, and a mass proportion of the polycrystalline particles in the positive electrode active material is less than or equal to 50%.

The polycrystalline particle refers to a secondary particle, i.e., a particle formed by the agglomeration of a plurality of single crystal particles.

When the aspect ratio m of the positive electrode plate 231 and the compaction density ρ of the positive electrode active material layer 2312 in units of g/cm³ satisfy 3 ≤ m × ρ < 5, the resistance of the electrode plate can still be effectively reduced in the case where a certain amount of polycrystalline particles is used. The single crystal particles and the polycrystalline particles are used in combination, and the usage proportion of the single crystal particles is controlled to be greater than that of the polycrystalline particles, such that the resistance of the electrode plate can be effectively reduced. In addition, the performance of the polycrystalline particles can also be exerted while maintaining the rate capability of the positive electrode plate 231. Moreover, the size of the polycrystalline particle is usually greater than that of the single crystal particle. In some embodiments, the particle size of the polycrystalline particle is greater than that of the single crystal particle, and the combined use of the two achieves the matching of large and small particle sizes, thereby helping improve the compaction density and increasing the energy density.

Illustratively, when the aspect ratio m of the positive electrode plate 231 and the compaction density ρ of the positive electrode active material layer 2312 in units of g/cm³ satisfy 3 ≤ m × ρ < 5, the mass proportion of the polycrystalline particles in the positive electrode active material may be 5%, 10%, 15%, 20%, 25%, 30%, 35%, 40%, 45%, 50%, or the like, and may also be any value within a range not exceeding 50%.

In the technical solutions of some embodiments of the present application, the aspect ratio m of the positive electrode plate 231 and the compaction density ρ of the positive electrode active material layer 2312 in units of g/cm³ satisfy 3 ≤ m × ρ < 5, the positive electrode active material includes the single crystal particles and the polycrystalline particles, and the mass proportion of the polycrystalline particles in the positive electrode active material is less than or equal to 30%. When the aspect ratio m of the positive electrode plate 231 and the compaction density ρ of the positive electrode active material layer 2312 in units of g/cm³ satisfy 3 ≤ m × ρ < 5, further reducing the use of the polycrystalline particles is more beneficial to reducing the resistance of the electrode plate.

In the technical solutions of some embodiments of the present application, the aspect ratio m of the positive electrode plate 231 and the compaction density ρ of the positive electrode active material layer 2312 in units of g/cm³ satisfy m × ρ ≥ 5, and the positive electrode active material is a single crystal particle. When the aspect ratio m of the positive electrode plate 231 and the compaction density ρ of the positive electrode active material layer 2312 in units of g/cm³ satisfy m × ρ ≥ 5, the exclusive use of the single crystal particles as the positive electrode active material enables effective control of the resistance of the positive electrode plate 231.

In the technical solutions of some embodiments of the present application, the aspect ratio m of the positive electrode plate 231 and the compaction density ρ of the positive electrode active material layer 2312 in units of g/cm³ satisfy 15 ≥ m × ρ ≥ 5, and the positive electrode active material is a single crystal particle. The exclusive use of the single crystal particles as the positive electrode active material is particularly beneficial to reducing the resistance of the positive electrode plate 231 having the aspect ratio m and the compaction density ρ of the positive electrode active material layer 2312 in units of g/cm³ that satisfy 15 ≥ m × ρ ≥ 5.

In the technical solutions of some embodiments of the present application, the lithium-ion battery further includes positive electrode tabs 2313, each positive electrode plate 231 is connected to at least one positive electrode tab 2313, and the total length W1 of a joint between a single positive electrode plate 231 and at least one positive electrode tab 2313 and the width W of the positive electrode plate 231 satisfy: W ≤ W1.

Each positive electrode plate 231 being connected to at least one positive electrode tab 2313 means that each positive electrode plate 231 is correspondingly connected to at least one positive electrode tab 2313. For example, one positive electrode plate 231 may be connected to one positive electrode tab 2313, two positive electrode tabs 2313, three positive electrode tabs 2313, four positive electrode tabs 2313, or the like.

The total length W1 of the joint between the single positive electrode plate 231 and at least one corresponding positive electrode tab 2313 and the width W of the positive electrode plate 231 satisfying: W ≤ W1 means that the total length of joints between all positive electrode tabs 2313 connected to the same positive electrode plate 231 and the positive electrode plate 231 is not less than the width of the positive electrode plate 231. The joint between the positive electrode tab 2313 and the positive electrode plate 231 refers to a junction between the positive electrode plate 231 and the positive electrode tab 2313, i.e., the bottom of the positive electrode tab 2313. Illustratively, when only one positive electrode tab 2313 is connected to the positive electrode plate 231, a single side (a long side or a short side) of the positive electrode plate 231 is connected to the positive electrode tab 2313, and the width of the positive electrode tab 2313 is the same as the width of the positive electrode plate; that is, the positive electrode plate 231 is in a full-tab state. When two positive electrode tabs 2313 are connected to the positive electrode plate 231, the two positive electrode tabs 2313 may be disposed on two opposite sides or two adjacent sides of the positive electrode plate 231. In addition, the positive electrode tabs 2313 may be disposed at a middle position of a side part of the positive electrode plate 231, or may be disposed at any position of the side part of the positive electrode plate 231.

The longer the total length of the joint between the positive electrode plate 231 and the positive electrode tab 2313 correspondingly connected to the positive electrode plate, the more conducive it is to the current passage capacity of the positive electrode plate 231. The total length W1 of the joint between the single positive electrode plate 231 and the at least one positive electrode tab 2313 and the width W of the positive electrode plate 231 are controlled to satisfy: W ≤ W1, such that the positive electrode plate 231 exhibits a sufficient current passage capacity, which is conducive to the uniform distribution of the current density of the positive electrode plate 231, thereby reducing the resistance of the positive electrode plate 231.

In the technical solutions of some embodiments of the present application, the lithium-ion battery further includes a shell body, and the relationship between the total thickness T1 of positive electrode active material layers 2312 of all positive electrode plates 231 in the lithium-ion battery and the width W2 of an inner cavity of the shell body satisfy that T1:W2 ranges from 35% to 45%; the positive electrode plate 231 includes a positive electrode current collector 2311, and the thickness of the positive electrode current collector 2311 is greater than or equal to 8 µm.

The total thickness T1 of the positive electrode active material layers 2312 of all the positive electrode plates 231 in the lithium-ion battery may be calculated based on the number N of the positive electrode plates 231, the thickness T of each positive electrode plate 231, and the thick coating T0 of each positive electrode current collector 2311 in the lithium-ion battery, and the calculation method may be T1 = N × (T - T0).

The resistance of the lithium-ion battery is related to the number of layers of the positive electrode plates 231 inside the lithium-ion battery. For lithium-ion batteries of the same system and size, the greater the number of layers of the positive electrode plates 231, the lower the resistance. In addition, the type and thickness of the current collector used also affect the resistance of the lithium-ion battery to a certain extent, and a relatively thick current collector is generally used to reduce the resistance. Therefore, the greater the number of layers of the positive electrode plates 231 and the larger the thickness of the current collector, the more conducive it is to the resistance of the lithium-ion battery. However, a relatively great number of layers and a relatively large thickness of the current collector have a certain negative impact on the energy density of the lithium-ion battery. The relationship between the total thickness T1 of the positive electrode active material layers 2312 of all the positive electrode plates 231 and the width W2 of the inner cavity of the shell body is controlled to satisfy that T1:W2 ranges from 35% to 45% and the thickness of the positive electrode current collector 2311 is greater than or equal to 8 µm, such that the battery can have a good energy density while ensuring that the positive electrode plates 231 have low resistance.

Illustratively, the ratio of the total thickness T1 of the positive electrode active material layers 2312 of all the positive electrode plates 231 in the lithium-ion battery to the width W2 of the inner cavity of the shell body may be 35%, 36%, 37%, 38%, 39%, 40%, 41%, 42%, 43%, 44%, 45%, or the like, which may also be any value within the range of 35% to 45%. The thickness of the positive electrode current collector 2311 may be 8 µm, 9 µm, 10 µm, 11 µm, 12 µm, 13 µm, 14 µm, 15 µm, 16 µm, 17 µm, 19 µm, 20 µm, or the like, or may be any value within a range greater than or equal to 8 µm.

In the technical solutions of some embodiments of the present application, a porosity of the positive electrode active material layer 2312 ranges from 23% to 33%.

Porosity refers to the percentage of the pore volume in a bulk material to the total volume of the material in its natural state. The positive electrode active material layer 2312 may be obtained by using a gas replacement method. With reference to GB/T24586-2009, the porosity P = (V1 - V2)/V1 * 100%, where V1 is the apparent volume of the electrode plate, and V2 is the true volume of the electrode plate.

The porosity of the positive electrode plate 231 may affect the distribution of the electrolytic solution inside the positive electrode plate 231. The smaller the porosity, the less conducive it is to the distribution of the electrolytic solution, while uneven distribution of the electrolytic solution may deteriorate the electrochemical polarization of the positive electrode plate 231, thereby affecting the resistance of the electrode plate. In addition, a smaller porosity of the positive electrode plate 231 is equivalent to a higher compaction density of the positive electrode plate 231, and the higher the compaction density, the more conducive it is to the energy density of the battery. The porosity of the positive electrode active material layer 2312 is controlled to range from 23% to 33%, such that the wettability of the positive electrode plate 231 when applied as the battery is improved, and the electrochemical polarization of the positive electrode plate 231 is reduced, thereby improving the kinetic performance of the positive electrode plate 231 and reducing the resistance of the positive electrode plate 231. In addition, the energy density of the battery can also be ensured.

Illustratively, the porosity of the positive electrode active material layer 2312 may be 23%, 24%, 25%, 26%, 27%, 28%, 29%, 30%, 31%, 32%, 33%, or the like, which may also be any value within the range of 23% to 33%.

In the technical solutions of some embodiments of the present application, the positive electrode active material includes a ternary system material, having a general formula of LiₓNiₐCo_{b}M_{c}O_{2-y}A_{y}, where x ranges from 0.2 to 1.2, 0.8 ≤ a < 1, 0 ≤ b ≤ 0.2, a + b + c = 1, 0 ≤ y < 0.2, M includes Al and/or Mn, and A includes at least one of S, N, F, Cl, Br, and I.

The ternary system material generally includes NCMA, NCA, NCM, and other types. Among them, NCA is widely applied due to its characteristics such as long lifespan, large capacity, and high energy density, but the specific heat capacity of NCA is relatively low; NCM integrates the advantages of three types of positive electrode materials, i.e., lithium cobaltate, lithium nickelate, and lithium manganate, and exhibits an obvious ternary synergistic effect. NCM may be generally represented as: LiNiₓCo_{y}Mn_{z}O₂.

The test for the content of Ni in the positive electrode active material includes: 0.4 g of the positive electrode active material layer 2312 powder of the electrode plate was taken and added to a 25 mL beaker, followed by the addition of 2 mL to 5 mL of nitric acid, and the beaker was left to stand overnight. Then, the beaker was placed on an electric hot plate, and heated at about 100 °C (the temperature was controlled by adjusting the input voltage with a voltage regulating transformer) until the powder was digested. Then, 0.5 mL of perchloric acid was added, and the mixture was heated for digestion at about 140 °C until all the white fumes had dissipated. The residue should have been white; otherwise, nitric acid and perchloric acid should have been added to repeat the digestion process. Finally, the residue was dissolved with 7% (referring to the volume percentage of the acid, the same below) hydrochloric acid to extract a solution. After adjusting, based on the content of the element to be tested, the solution to a proper volume, the Ni content was tested on an ICP-OES test instrument.

The electrode plate has a good compaction density, thereby helping improve the energy density of the battery. In addition, the ternary system material with a high nickel content has a high true density, and can be filled with more active substances per unit volume. Therefore, the use of the ternary material system as the positive electrode active material helps improve the energy density of the battery. In addition, the ternary system material having a nickel content of 0.8 ≤ a < 1 exhibits a high specific capacity, such that the energy density of the battery can also be effectively improved.

It should be noted that the above constraints on x encompass molar content of Li across various charging and discharging states of the battery (the battery voltage is generally between 2 V and 5 V).

It can be understood that as the charging and discharging process of the battery is accompanied by lithium (Li) deintercalation and consumption, the content of Li in the positive electrode plate varies when the battery is discharged to different states. The content of Li can be quantified by the molar content, but is not limited thereto. Meanwhile, when the positive electrode material is applied to the positive electrode plate in a battery system, the content of Li in the positive electrode material contained in the electrode plate generally changes after charging and discharging cycles. In the enumeration related to the positive electrode material in the present application, unless otherwise specified, the content of Li refers to that of the material in its initial state. With respect to "the content of Li refers to that of the material in its initial state", the initial state of the material refers to a state before the material is added to form a positive electrode slurry or a state after the battery is fully discharged within a specified charging and discharging range (in this case, lithium ions are intercalated into the positive electrode as much as possible). It can be understood that new materials obtained by appropriate modification on the basis of the listed positive electrode materials are also within the scope of the positive electrode material. The aforementioned appropriate modification refers to a modification method acceptable to the positive electrode material, and non-limiting examples include coating modification.

In the enumeration related to the positive electrode material in the present application, the content of oxygen (O) is only a theoretical value. Molar content of oxygen varies due to oxygen release from the crystal lattice, and the actual content of O will fluctuate. The content of O can be quantified by the molar content, but is not limited thereto.

In the technical solutions of some embodiments of the present application, in some embodiments, a mass content of Ni on the surface of the single crystal particles is lower than a mass content of Ni inside the single crystal particles; the positive electrode active material includes polycrystalline particles, and a mass content of Ni on a surface of primary particles in the polycrystalline particles is lower than a mass content of Ni inside the primary particles.

The contact area between the surface layer of the single crystal particle and/or the polycrystalline particle and the electrolytic solution is large, such that situations such as particle fracture and side reactions are more likely to occur, and situations such as Ni²⁺ dissolution and Li+/Ni²⁺ mixing are more serious. A gradient Ni content design is performed on the primary particles of the single crystal particles and/or the polycrystalline particles, such that the Ni content proximal to the surface of the particles is lower, thereby reducing interfacial side reactions, while the Ni content proximal to the inside of the particles is higher, which is conducive to the capacity performance of the particles.

In the technical solutions of some embodiments of the present application, the single crystal particles include large single crystal particles and small single crystal particles, a median particle size Dv50 of the large single crystal particles ranges from 5 µm to 10 µm, and a median particle size Dv50 of the small single crystal particles ranges from 1 µm to 3.5 µm.

The median particle size Dv50 refers to a particle size corresponding to the cumulative amount of 50% in a cumulative volume particle size distribution diagram. The cumulative volume particle size distribution diagram, also referred to as a particle size differential distribution diagram, is a curve plotted with the particle size as the horizontal coordinate and the differential distribution of content at different particle sizes as the vertical coordinate, which can accurately reflect the particle size distribution characteristics of the material particles. The volume particle size distribution of the material may be determined by using a laser particle size analyzer, and an interval particle size distribution curve is plotted. During the measurement of the median particle sizes of the large single crystal particles and the small single crystal particles in the active material layer of the positive electrode plate 231, the positive electrode active material layer 2312 may be removed and sintered in a tube furnace at 600 °C for 3 h in an oxygen atmosphere to remove conductive carbon and a binder, so as to obtain a powder material of the positive electrode active material layer 2312. The powder material is dried and then detected by using a laser particle size analyzer with a model number of Mastersizer3000 to obtain a cumulative volume particle size distribution diagram. The median particle sizes of the large single crystal particles and the small single crystal particles may be obtained based on peaks in the cumulative volume particle size distribution diagram.

The median particle size Dv50 of the large single crystal particles refers to: when the large single crystal particles are accumulated from small to large, the particle size of the large single crystal particles at which the cumulative volume reaches 50% of the total volume is the median particle size Dv50. The median particle size Dv50 of the small single crystal particles refers to: when the small single crystal particles are accumulated from small to large, the particle size of the small single crystal particles at which the cumulative volume reaches 50% of the total volume is the median particle size Dv50.

The combination of the large single crystal particles and the small single crystal particles can help improve the compaction density of the positive electrode plate 231, especially the compaction density of the positive electrode plate 231 in the case of pure single crystal particles, thereby enabling the battery to have a higher energy density.

Illustratively, the median particle size Dv50 of the large single crystal particles may be 5 µm, 5.2 µm, 5.4 µm, 5.6 µm, 5.8 µm, 6 µm, 6.2 µm, 6.4 µm, 6.6 µm, 6.8 µm, 7 µm, 7.2 µm, 7.4 µm, 7.6 µm, 7.8 µm, 8 µm, 8.2 µm, 8.4 µm, 8.6 µm, 8.8 µm, 9 µm, 9.2 µm, 9.4 µm, 9.6 µm, 9.8 µm, 10 µm, or the like, and may also be any value within the range of 7 µm to 10 µm. The median particle size Dv50 of the small single crystal particles may be 1 µm, 1.2 µm, 1.4 µm, 1.6 µm, 1.8 µm, 2 µm, 2.2 µm, 2.4 µm, 2.6 µm, 2.8 µm, 3 µm, 3.2 µm, 3.4 µm, 3.5 µm, or the like, and may also be any value within the range of 1 µm to 3.5 µm.

In the technical solutions of some embodiments of the present application, a particle size distribution SPAN value of the single crystal particles ranges from 1.0 to 2.0.

The SPAN value refers to a particle size span value, and may be calculated by the formula SPAN = (Dv90 - Dv10)/Dv50.

The particle size distribution SPAN value of the single crystal particles is controlled to range from 1.0 to 2.0, such that during the preparation process of the positive electrode plate 231, the slurry of the positive electrode active material has better stability and is less likely to generate gel, and the single crystal particle has a strong dispersion capability. This is conducive to the uniform distribution of the positive electrode active material and a conductive agent in the prepared positive electrode active material layer 2312, thereby forming a better conductive network.

Illustratively, the particle size distribution SPAN value of the single crystal particles may be 1.0, 1.1, 1.2, 1.3, 1.4, 1.5, 1.6, 1.7, 1.8, 1.9, 2.0, or the like, and may also be any value within the range of 1.0 to 2.0.

In the technical solutions of some embodiments of the present application, the Dv2 of the single crystal particles is greater than 0.7 µm.

The Dv2 of the single crystal particles refers to: when the single crystal particles are accumulated from small to large, the particle size of the single crystal particles at which the cumulative volume reaches 2% of the total volume is the Dv2.

The Dv2 of the single crystal particles is controlled to be greater than 0.7 µm, such that during the preparation process of the positive electrode plate 231, the slurry of the positive electrode active material has better stability and is less likely to generate gel, and the single crystal particle has a strong dispersion capability. This is conducive to the uniform distribution of the positive electrode active material and the conductive agent in the prepared positive electrode active material layer 2312, thereby forming a better conductive network.

Illustratively, the Dv2 of the single crystal particles may be 0.7 µm, 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, 2 µm, or the like, or may also be any value within a range greater than 0.7 µm.

In the technical solutions of some embodiments of the present application, the lithium-ion battery further includes negative electrode plates 232, each negative electrode plate 232 includes a negative electrode active material layer 2322, the negative electrode active material layer 2322 includes graphite and a silicon material, and the mass of the silicon material accounts for 5% to 15% of the mass of the graphite.

The silicon material exhibits a high specific capacity, and the total weight of active substances of the negative electrode can be effectively reduced by doping the silicon material into the negative electrode active material layer 2322. Compared with the negative electrode having a pure graphite system, the weight per unit area of the silicon-doped negative electrode plate 232 is significantly reduced, the thickness of the negative electrode plate 232 is reduced, and the kinetic performance is improved, thereby reducing the resistance of the negative electrode plate 232 and also improving the energy density of the battery.

Illustratively, the ratio of the mass of the silicon material to the mass of the graphite may be 5%, 6%, 7%, 8%, 9%, 10%, 11%, 12%, 13%, 14%, 15%, or the like, or may also be any value within the range of 5% to 15%.

In the technical solutions of some embodiments of the present application, the silicon material includes at least one of silicon oxide, silicon-carbon composite, and pre-lithiated silicon; the median particle size Dv50 of the silicon material ranges from 6 µm to 15 µm.

In terms of optimizing the transport path of lithium ions, the solid-phase diffusion of pre-lithiated silicon is better than that of other types of silicon materials, such that kinetics can be better enhanced, and the resistance of the positive electrode is optimized. Certainly, from the perspective of optimizing other electrical properties of lithium-ion batteries, other silicon materials may also have better performance than pre-lithiated silicon. Therefore, it can be understood by those skilled in the art that the selection of the silicon material can be made according to the electrical properties more required in actual situations.

The median particle size Dv50 of the silicon material refers to: when the silicon material is accumulated from small to large, the particle size of the silicon material at which the cumulative volume reaches 50% of the total volume is the median particle size Dv50.

The median particle size Dv50 of the silicon material is controlled to range from 6 µm to 15 µm, such that the diffusion path of lithium ions can be effectively shortened, thereby reducing the resistance of the negative electrode plate 232.

Illustratively, the median particle size Dv50 of the silicon material may be 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, or the like. The median particle size of the silicon material may also be any value within the range of 6 µm to 15 µm.

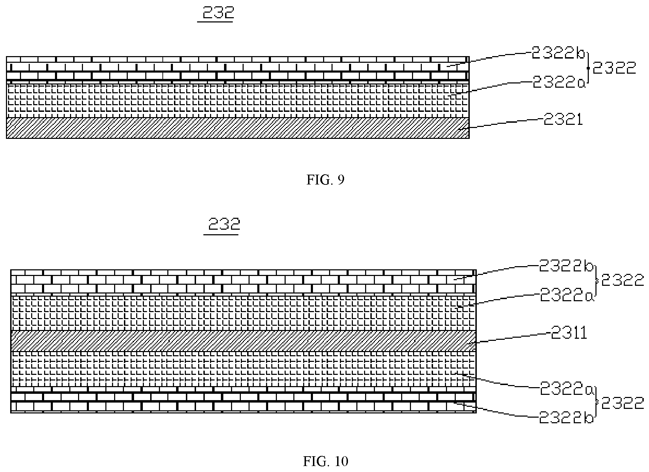

FIG. 9 is a schematic diagram of a first structure of the negative electrode plate 232 according to some embodiments of the present application, and FIG. 10 is a schematic diagram of a second structure of the negative electrode plate 232 according to some embodiments of the present application. Referring to FIGs. 9 and 10, in the technical solutions of some embodiments of the present application, the negative electrode plate 232 includes a negative electrode current collector 2321, and the negative electrode active material layer 2322 is attached to the negative electrode current collector 2321, the negative electrode active material layer 2322 includes a first negative electrode active material layer 2322a and a second negative electrode active material layer 2322b, the first negative electrode active material layer 2322a is disposed between the negative electrode current collector 2321 and the second negative electrode active material layer 2322b, and the silicon material is provided in the second negative electrode active material layer 2322b; a compaction density of the negative electrode active material layer 2322 is less than or equal to 1.70 g/cm3.

The negative electrode current collector 2321 may be made of one or more of copper and a copper alloy. The situation in which the negative electrode active material layer 2322 is attached to the negative electrode current collector 2321 may be as follows. Referring further to FIG. 9, one surface of the negative electrode current collector 2321 is sequentially provided with the first negative electrode active material layer 2322a and the second negative electrode active material layer 2322b; referring further to FIG. 10, two surfaces of the negative electrode current collector 2321 are both sequentially provided with the first negative electrode active material layer 2322a and the second negative electrode active material layer 2322b.

The silicon material is entirely placed in an outer layer, such that the silicon material can increase the porosity of the negative electrode plate 232. In addition, particles of the silicon material in an upper layer can preferentially intercalate lithium, thereby effectively shortening the transport path of Li⁺ and reducing the concentration polarization of the negative electrode plate 232. The compaction density of the negative electrode active material layer 2322 is controlled to be less than or equal to 1.70 g/cm³, such that the negative electrode plate 232 has a good porosity, thereby effectively increasing the conduction path of lithium ions, enhancing the kinetics of the negative electrode plate 232, and reducing the resistance.

After the aforementioned description of the material and the structure of the lithium-ion battery, a method for preparing a lithium-ion battery is described specifically below.

The method for preparing the lithium-ion battery includes the following steps. An aspect ratio of the positive electrode plate 231 and a target compaction density of the positive electrode active material layer 2312 are determined, and then a proportion of the single crystal particles in the positive electrode active material layer 2312 is selected according to a relationship between a product of the aspect ratio and the compaction density and the proportion of the single crystal particles. The relationship between the proportion of the single crystal particles and the aspect ratio of the positive electrode plate 231 and the target compaction density of the positive electrode active material layer 2312 satisfies that: when a product m × ρ of the aspect ratio m of the positive electrode plate 231 and the compaction density ρ of the positive electrode active material layer 2312 in units of g/cm³ is greater than or equal to 3, the positive electrode active material includes the single crystal particles, and a mass proportion of the single crystal particles in the positive electrode active material is not less than 50%. The single crystal particles are mixed with other raw materials to form a slurry, and then the slurry is applied on the positive electrode current collector 2311 to obtain the positive electrode plate 231. After the positive electrode plate 231 is prepared, the positive electrode plate 231, a separator, the negative electrode plate 232, and a separator, and so on are stacked in sequence to form a stacked electrode assembly 23. Then, the electrode assembly 23 is placed inside the shell body, and an electrolytic solution is injected to form the lithium-ion battery.

According to the method, when the product of the aspect ratio of the positive electrode plate 231 and the compaction density of the positive electrode active material layer 2312 is greater than 3, the mass proportion of the single crystal particles in the positive electrode active material is controlled to be not less than 50%. Since the single crystal particles are less prone to fracture during cold pressing and long-term charging and discharging process, the use of more single crystal particles helps reduce the possibility of the positive electrode active material undergoing side reactions, thereby reducing the occurrence of loss of the conductive network in the positive electrode active material layer 2312 and local potential increase caused by the formation of particle "islands", and reducing the resistance of the electrode plate.

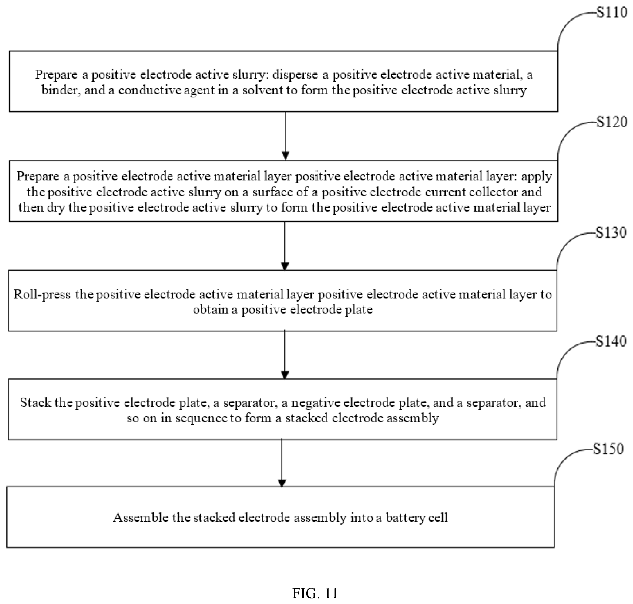

FIG. 11 is a flowchart of a method for preparing a lithium-ion battery according to some embodiments of the present application. Referring to FIG. 11, the embodiments of the present application provide a method for preparing a lithium-ion battery. The method includes:

In S110, a positive electrode active slurry is prepared: A positive electrode active material, a binder, and a conductive agent are dispersed in a solvent to form the positive electrode active slurry. The positive electrode active material may be the positive electrode active material described above, for example, a ternary system material having a chemical formula of LiNiₓCo_{y}Mn_{z}O₂, (0 ≤ x ≤ 1, 0 ≤ y ≤ 1, 0 ≤ z ≤ 1, x + y + z = 1), and optionally, a small amount of other positive electrode active materials may also be added. In addition, the mass proportion of the single crystal particles used in the positive electrode active is determined based on the aspect ratio of the positive electrode plate 231 and the target compaction density of the positive electrode active material layer 2312, and the specific relationship satisfies that: when the product m × ρ of the aspect ratio m of the positive electrode plate 231 and the compaction density ρ of the positive electrode active material layer 2312 in units of g/cm³ is greater than or equal to 3, the mass proportion of the single crystal particles in the positive electrode active material is not less than 50%.

For the specific selection of the ternary system material, reference may be made to the selection of the ternary system material in the positive electrode active material layer 2312 in the positive electrode plate 231 described above, which will not be repeated here.

The binder may be one or more of styrene-butadiene rubber, water-based acrylic resin, carboxymethylcellulose, polyvinylidene fluoride, polytetrafluoroethylene, an ethylene-vinyl acetate copolymer, polyvinyl alcohol, and polyvinyl butyral. The conductive agent may be at least one of conductive carbon black, carbon fiber, carbon nanotube, Ketjen black, graphene, or acetylene black. The solvent may be one or more of dimethyl glutarate and N-methylpyrrolidone. A leveling agent, a dispersant, and the like may be further added to a first positive electrode active slurry.

In S120, a positive electrode active material layer 2312 is prepared: The positive electrode active slurry is applied on a surface of a positive electrode current collector 2311 and then dried to form the positive electrode active material layer 2312. During coating, the positive electrode active slurry may be applied on one surface or two surfaces of the positive electrode current collector 2311 according to requirements.

The manner of coating may be blade coating, roll coating, slit coating, or the like, which is not limited in the present application.

In S130, the positive electrode active material layer 2312 is roll-pressed to obtain a positive electrode plate 231.

In S140, the positive electrode plate 231, a separator, a negative electrode plate 232, and a separator, and so on are stacked in sequence to form a stacked electrode assembly 23.

In S150, the stacked electrode assembly 23 is assembled into a battery cell 20. The battery cell 20 may be used to prepare the secondary battery 100 and provide electric energy for an electric device.

Next, one or more embodiments are described in more detail with reference to the following examples. Certainly, these examples do not limit the scope of the one or more embodiments.

### Examples and Comparative Examples

### [Preparation of positive electrode plate]

A positive electrode active material, a conductive agent carbon black, and a binder polyvinylidene fluoride (PVDF) were added to N-methylpyrrolidone (NMP) in a mass ratio of 96.5:1:2.5, and stirred and mixed uniformly to obtain a coating slurry. Then, the coating slurry was evenly applied on a positive electrode current collector aluminum foil, dried, cold-pressed, and slit to obtain a positive electrode plate.

### [Preparation of negative electrode plate]

An active substance, the conductive agent carbon black, the binder styrene-butadiene rubber (SBR), and a thickener sodium hydroxymethylcellulose (CMC) were dissolved in a solvent deionized water in a mass ratio of 90:5:3:2, and the mixture was well mixed to prepare a negative electrode slurry. The negative electrode slurry was evenly applied on a negative electrode current collector copper foil once or multiple times, dried, cold-pressed, and slit to obtain a negative electrode plate.

### [Preparation of electrolytic solution]

In a glove box under argon atmosphere (H₂O < 0.1 ppm, O₂ < 0.1 ppm), organic solvents ethylene carbonate (EC)/diethyl carbonate (DEC)/ethyl methyl carbonate (EMC) were mixed uniformly in a volume ratio of 1/1/1. Then, 1 mol/L of LiPF₆ lithium salt was added to be dispersed uniformly, and then fluoroethylene carbonate with a concentration of 5% was dissolved in the above organic solvents and stirred uniformly to obtain an electrolytic solution.

### [Separator]

A polyethylene film was used as a separator.

### [Preparation of battery cell]

The prepared positive electrode plate, negative electrode plate, and separator (a porous polymer film made of polyethylene (PE)) were made into a corresponding electrode assembly according to a Z-shaped stacked structure, and the electrode assembly was dried in a vacuum at 90 °C for 12 h. Subsequently, a positive electrode tab and a negative electrode tab were ultrasonically welded. An aluminum tab was used for the positive electrode, a nickel tab was used for the negative electrode, and the positive electrode tab and the negative electrode tab were located on the same side of the electrode assembly. After the tabs were welded, the electrode assembly was inserted into an aluminum-plastic film with a proper size for top-side sealing, and the temperature for the top-side sealing was 145 °C. Then, the electrode assembly was injected with the electrolytic solution and sealed to obtain an uncharged battery. The uncharged battery was then sequentially subjected to processes including standing, hot and cold pressing, formation, shaping, capacity testing, and the like, so as to obtain the battery cell.

The main parameter controls of Examples and 1 to 33 and Comparative Examples 1 and 2 are shown in the following table:

| | Length of positive electrode plate mm | Width of positive electrode plate mm | Aspect Ratio m | ρ g/ cm³ | m×ρ | Positive electrode active material | | | Negative electrode active material | Number of positive electrode tabs | The total length W1 of a joint between a single positive electrode plate and at least one corresponding positive electrode tab and the width W of the positive electrode plate satisfy: |
|---|---|---|---|---|---|---|---|---|---|---|---|
| | | | | | | Molar content of Ni | Single crystal mass proportion | Polycrysta lline mass proportion | | | |
| Comparative Example 1 | 50 | 50 | 1 | 2.5 | 2.5 | 90% | 50% | 50% | Artificial graphite: silicon-carbon composite = 90:10 | 2 | W1=2W |
| Comparative Example 2 | 50 | 50 | 1 | 2.5 | 2.5 | 90% | 45% | 55% | Artificial graphite: silicon-carbon composite = 90:10 | 2 | W1=2W |
| Example 1 | 50 | 50 | 1 | 3.3 | 3.3 | 90% | 50% | 50% | Artificial graphite: silicon-carbon composite = 90:10 | 2 | W1=2W |
| Example 2 | 50 | 150 | 3 | 3.5 | 10.5 | 90% | 100% | 0% | Artificial graphite: silicon-carbon composite = 90:10 | 2 | W1=2W |
| Example 3 | 50 | 300 | 6 | 3.7 | 22.2 | 90% | 100% | 0% | Artificial graphite: silicon-carbon composite = 90:10 | 2 | W1=2W |
| Example 4 | 50 | 75 | 1.5 | 3.3 | 4.95 | 90% | 50% | 50% | Artificial graphite: silicon-carbon composite = 90:10 | 2 | W1=2W |
| Example 5 | 50 | 75 | 1.5 | 3.3 | 4.95 | 90% | 60% | 40% | Artificial graphite: silicon-carbon composite = 90:10 | 2 | W1=2W |
| Example 6 | 50 | 75 | 1.5 | 3.3 | 4.95 | 90% | 70% | 30% | Artificial graphite: silicon-carbon composite = 90:10 | 2 | W1=2W |
| Example 7 | 50 | 75 | 1.5 | 3.3 | 4.95 | 90% | 80% | 20% | Artificial graphite: silicon-carbon composite = 90:10 | 2 | W1=2W |
| Example 8 | 50 | 75 | 1.5 | 3.3 | 4.95 | 90% | 90% | 10% | Artificial graphite: silicon-carbon composite = 90:10 | 2 | W1=2W |
| Example 9 | 50 | 75 | 1.5 | 3.7 | 5.55 | 90% | 50% | 50% | Artificial graphite: silicon-carbon composite = 90:10 | 2 | W1=2W |
| Example 10 | 50 | 150 | 3 | 3.3 | 9.9 | 90% | 70% | 30% | Artificial graphite: silicon-carbon composite = 90:10 | 2 | W1=2W |
| Example 11 | 50 | 150 | 3 | 3.7 | 11.1 | 90% | 90% | 10% | Artificial graphite: silicon-carbon composite = 90:10 | 2 | W1=2W |
| Example 12 | 50 | 100 | 2 | 3.3 | 6.6 | 90% | 50% | 50% | Artificial graphite: silicon-carbon composite = 90:10 | 2 | W1=2W |
| Example 13 | 50 | 100 | 2 | 3.3 | 6.6 | 90% | 70% | 30% | Artificial graphite: silicon-carbon composite = 90:10 | 2 | W1=2W |
| Example 14 | 50 | 100 | 2 | 3.3 | 6.6 | 90% | 90% | 10% | Artificial graphite: silicon-carbon composite = 90:10 | 2 | W1=2W |
| Example 15 | 50 | 100 | 2 | 3.3 | 6.6 | 90% | 100% | 0% | Artificial graphite: silicon-carbon composite = 90:10 | 2 | W1=2W |
| Example 16 | 50 | 150 | 3 | 3.3 | 9.9 | 90% | 100% | 0% | Artificial graphite: silicon-carbon composite = 90:10 | 2 | W1=2W |
| Example 17 | 50 | 225 | 4.5 | 3.3 | 14.85 | 90% | 100% | 0% | Artificial graphite: silicon-carbon composite = 90:10 | 2 | W1=2W |
| Example 18 | 50 | 250 | 5 | 3.3 | 16.5 | 90% | 100% | 0% | Artificial graphite: silicon-carbon composite = 90:10 | 2 | W1=2W |
| Example 19 | 50 | 250 | 5 | 3.4 | 17 | 90% | 100% | 0% | Artificial graphite: silicon-carbon composite = 90:10 | 2 | W1=2W |
| Example 20 | 50 | 250 | 5 | 3.5 | 17.5 | 90% | 100% | 0% | Artificial graphite: silicon-carbon composite = 90:10 | 2 | W1=2W |
| Example 21 | 50 | 250 | 5 | 3.7 | 18.5 | 90% | 100% | 0% | Artificial graphite: silicon-carbon composite = 90:10 | 2 | W1=2W |
| Example 22 | 50 | 250 | 5 | 3.5 | 17.5 | 90% | 100% | 0% | Artificial graphite: silicon-carbon composite = 90:10 | 2 | W1=W |
| Example 23 | 50 | 250 | 5 | 3.5 | 17.5 | 90% | 100% | 0% | Artificial graphite: silicon-carbon composite = 90:10 | 2 | W1=0.3W |
| Example 24 | 50 | 250 | 5 | 3.5 | 17.5 | 90% | 100% | 0% | Artificial graphite: silicon-carbon composite = 90:10 | 1 | W1=W |
| Example 25 | 50 | 100 | 2 | 3.3 | 6.6 | 85% | 50% | 50% | Artificial graphite: silicon-carbon composite = 90:10 | 2 | W1=2W |
| Example 26 | 50 | 100 | 2 | 3.3 | 6.6 | 80% | 50% | 50% | Artificial graphite: silicon-carbon composite = 90:10 | 2 | W1=2W |
| Example 27 | 50 | 100 | 2 | 3.3 | 6.6 | 75% | 50% | 50% | Artificial graphite: silicon-carbon composite = 90:10 | 2 | W1=2W |
| Example 28 | 50 | 100 | 2 | 3.3 | 6.6 | 90% | 50% | 50% | Artificial graphite | 2 | W1=2W |
| Example 29 | 50 | 100 | 2 | 3.3 | 6.6 | 90% | 50% | 50% | Artificial graphite: silicon-carbon composite = 97:3 | 2 | W1=2W |
| Example 30 | 50 | 100 | 2 | 3.3 | 6.6 | 90% | 50% | 50% | Artificial graphite: silicon-carbon composite = 95:5 | 2 | W1=2W |
| Example 31 | 50 | 100 | 2 | 3.3 | 6.6 | 90% | 50% | 50% | Artificial graphite: silicon-carbon composite = 87:13 | 2 | W1=2W |
| Example 32 | 50 | 100 | 2 | 3.3 | 6.6 | 90% | 50% | 50% | Artificial graphite: silicon-carbon composite = 85:15 | 2 | W1=2W |
| Example 33 | 50 | 100 | 2 | 3.3 | 6.6 | 100% | 100% | 0% | Artificial graphite: silicon-carbon composite = 85:15 | 3 | W1=2W |

In the above table, m refers to the aspect ratio of the positive electrode plate, ρ refers to the compaction density of the positive electrode active material layer in units of g/cm³, W1 refers to the total length of the joint between the single positive electrode plate and the corresponding positive electrode tab, and W refers to the width of the positive electrode plate.

When the number of positive electrode tabs is 2, the two tabs are disposed opposite to each other.

A ternary material with molar content of Ni of 90% is LiNi_{0.9}Co_{0.07}Mn_{0.03}O₂; a ternary material with molar content of Ni of 85% is LiNi_{0.85}Co_{0.10}Mn_{0.05}O₂, a ternary material with molar content of Ni of 80% is LiNi_{0.80}Co_{0.12}Mn_{0.08}O₂, and a ternary material with molar content of Ni of 75% is LiNi_{0.75}Co_{0.15}Mn_{0.10}O₂.

The number of stacked layers of the cell in each example and comparative example is 10.

The performance of the batteries provided in the examples and the comparative examples are tested, and the performance test specifically includes a test for the initial internal resistance of the battery: At room temperature of 25 °C, the battery cell was discharged to 50% SOC at a current of 1/3C1, and then discharged at a current of 4C1 for 10 s. An open-circuit voltage before discharging was denoted as U1, a terminal voltage at the end of discharging was denoted as U2, U2 - U1 was denoted as ΔU1, and the ratio of ΔU to the current I_{4C1} was the initial internal resistance DCR1 of the battery; that is, DCR1 = ΔU1/I_{4C1}. C1 is the initial capacity of the battery, and the test method includes: At 25 °C, a cell battery was charged to 4.25 V at a constant current of 0.33C, further charged to a current of 0.05C at a constant voltage of 4.25 V, and rested for 30 min. Then, the lithium-ion battery was discharged to 2.8 V at a constant current of 0.33C, and the discharge capacity was denoted as C1. The specific process of discharging to 50% SOC is as follows: At 25 °C, the cell battery was charged to 4.25 V at a constant current of 0.33C1, further charged to a current of 0.05C1 at a constant voltage of 4.25 V, rested for 30 min, and then discharged to 0.5C1 at a constant current of 0.33C1 for cut-off.

A test for the internal resistance of the battery after 200 cycles: At room temperature of 25 °C, the battery cell was discharged to 50% SOC, and then discharged at a current of 4C2 for 10 s. An open-circuit voltage before discharging was denoted as U3, a terminal voltage at the end of discharging was denoted as U4, U4 - U2 was denoted as ΔU2, and the ratio of ΔU2 to the current I_{4C2} was the internal resistance DCR2; that is, DCR2 = ΔU2/I_{4C2}. C2 is the capacity of the battery after 200 cycles, and the test method includes: At 25 °C, a cell battery was charged to 4.25 V at a constant current of 0.33C, further charged to a current of 0.05C at a constant voltage of 4.25 V, and rested for 30 min. Then, the lithium-ion battery was discharged to 2.8 V at a constant current of 0.33C, and the discharge capacity was denoted as C2. The specific process of discharging to 50% SOC is as follows: At 25 °C, the cell battery was charged to 4.25 V at a constant current of 0.33C2, further charged to a current of 0.05C2 at a constant voltage of 4.25 V, rested for 30 min, and then discharged to 0.5C2 at a constant current of 0.33C2 for cut-off.

Increase rate of DCR after 200 cycles = (DCR2 - DCR1)/DCR1, which can represent an increase in DCR during the cycling process. The larger the increase in DCR, the more severely the DCR of the battery deteriorates during the cycling process under the influence of current density non-uniformity, the conductive network, increased battery polarization, and the like, thereby affecting the kinetic performance and the cycle life of the battery.

The increase rate of DCR after 2000 cycles can be obtained with reference to the increase rate of DCR after 200 cycles. DCR2 is the internal resistance after 2000 cycles, and for the test process, reference may be made to the test for the internal resistance of the battery after 200 cycles described above.

A test for the volumetric energy density (VED) of the battery: Volumetric energy density = battery discharge energy/cell volume. A test for the battery discharge energy includes: At 25 °C, the cell battery was first charged to 4.25 V at a constant current of 0.33C, further charged to a current of 0.05C at a constant voltage of 4.25 V, and rested for 30 min. Then, the lithium-ion battery is discharged to 2.8 V at a constant current of 0.33C. The discharge energy is the energy of the battery. Cell volume = cell length × cell width × cell thickness. A method for measuring the dimensions of the electrode plate is as follows: After a fully charged cell was disassembled, a cathode electrode plate was taken out. The cathode electrode plate was soaked in dimethyl carbonate (DMC) for 6 h, then taken out and dried. After drying, the dimensions of the cathode electrode plate were measured. The length and width can be measured by using a charge-coupled device (CCD) or a ruler, and the thickness can be measured by using a micrometer caliper. The volumetric energy density of the battery is tested, such that the energy density level of the cell with this design can be preliminarily characterized. The proportion of the single crystal particles and the polycrystalline particles does not affect the specific capacity of the material; that is, under the same condition of m × p, the energy density of the electrode plate is the same. The larger m × p is, the higher the energy density of the electrode plate is, and the cell with this design can also have a higher energy density.

Test results are shown in the following table:

| | Resistance of battery cell: 25 °C DCR mΩ | Resistance of battery cell after 200 cycles: 25°C DCR mΩ | Increase rate of DCR after 200 cycles | DCR after 2000 cycles | Increase rate of DCR after 2000 cycles | Battery VED Wh/L |
|---|---|---|---|---|---|---|
| Comparative Example 1 | 51.98 | 65.49 | 26.00% | 92.52 | 78.0% | 637.0 |
| Comparative Example 2 | 62.37 | 80.02 | 28.30% | 116.56 | 86.9% | 636.9 |
| Example 1 | 34.65 | 38.18 | 10.20% | 45.25 | 30.60% | 709.7 |
| Example 2 | 11.67 | 13.30 | 14.00% | 16.61 | 42.42% | 771.3 |
| Example 3 | 6.93 | 8.54 | 23.20% | 11.17 | 61.25% | 798.7 |
| Example 4 | 23.10 | 26.24 | 13.60% | 33.78 | 46.2% | 731.3 |
| Example 5 | 21.81 | 24.29 | 11.40% | 29.32 | 34.4% | 731.2 |
| Example 6 | 21.28 | 23.39 | 9.93% | 27.50 | 29.3% | 730.9 |
| Example 7 | 20.79 | 22.52 | 8.30% | 25.45 | 22.4% | 731.5 |
| Example 8 | 20.33 | 21.49 | 5.70% | 22.98 | 13.0% | 730.7 |
| Example 9 | 25.41 | 29.53 | 16.20% | 39.90 | 57.0% | 761.3 |
| Example 10 | 11.90 | 13.60 | 14.30% | 16.45 | 38.3% | 755.5 |
| Example 11 | 12.94 | 15.16 | 17.20% | 20.66 | 59.7% | 785.8 |
| Example 12 | 17.33 | 19.82 | 14.40% | 25.81 | 49.0% | 743.3 |
| Example 13 | 16.29 | 18.11 | 11.20% | 21.77 | 33.7% | 743.3 |
| Example 14 | 15.94 | 16.96 | 6.40% | 18.75 | 17.7% | 742.9 |
| Example 15 | 15.59 | 16.34 | 4.80% | 17.61 | 13.0% | 743.5 |
| Example 16 | 10.63 | 11.30 | 6.30% | 12.78 | 20.3% | 755.5 |
| Example 17 | 7.32 | 7.88 | 7.70% | 9.20 | 25.7% | 763.7 |
| Example 18 | 6.79 | 7.42 | 9.20% | 8.75 | 28.9% | 765.4 |
| Example 19 | 6.93 | 7.80 | 12.50% | 9.36 | 35.0% | 773.5 |
| Example 20 | 7.10 | 8.23 | 15.90% | 10.58 | 48.9% | 781.3 |
| Example 21 | 7.62 | 9.25 | 21.30% | 12.98 | 70.3% | 796.1 |
| Example 22 | 7.17 | 8.66 | 20.80% | 11.31 | 57.7% | 781.3 |
| Example 23 | 7.48 | 9.16 | 22.40% | 12.12 | 61.9% | 780.8 |
| Example 24 | 7.69 | 9.59 | 24.70% | 12.96 | 68.5% | 781.6 |
| Example 25 | 18.19 | 20.88 | 14.80% | 27.24 | 49.7% | 722.4 |
| Example 26 | 18.33 | 21.13 | 15.30% | 27.53 | 50.2% | 708.3 |
| Example 27 | 18.40 | 21.16 | 15.00% | 27.49 | 49.4% | 690.7 |
| Example 28 | 17.84 | 20.57 | 15.30% | 26.28 | 47.3% | 678.8 |
| Example 29 | 17.67 | 20.32 | 15.00% | 25.78 | 45.9% | 682.9 |
| Example 30 | 17.50 | 20.09 | 14.80% | 25.35 | 44.8% | 702.4 |
| Example 31 | 17.15 | 19.59 | 14.20% | 24.39 | 42.2% | 765.1 |
| Example 32 | 16.86 | 19.17 | 13.70% | 23.60 | 40.0% | 776.2 |
| Example 33 | 15.12 | 15.84 | 4.70% | 17.26 | 14.1% | 776.5 |

It can be learned from the above table that the battery is prepared by using the positive electrode plate according to the embodiments of the present application. The battery has a low initial internal resistance, a low increase rate of the internal resistance, and a high volumetric energy density.

As can be seen from the comparison between the examples and the comparative examples, as the aspect ratio m of the positive electrode plate gradually increases or the compaction density ρ of the positive electrode active material layer gradually increases, the volumetric energy density of the battery gradually increases. In addition, as can be seen from the comparison of the data of Examples 1 to 3, Examples 9 to 11, and Comparative Examples 1 and 2, when m × ρ of the positive electrode plate is 3 or higher, the volumetric energy density of the electrode plate is 709.7 Wh/L or higher. As can be seen from the comparison of Examples 4 to 8, when the aspect ratio m of the positive electrode plate and the compaction density ρ of the positive electrode active material layer remain unchanged, as the mass proportion of the single crystal particles of the positive electrode active material increases, the increase rates of the resistance after 200 and 2000 cycles show a gradually decreasing trend. When the mass proportion of the single crystal particles is 50% or higher, the increase rate of the internal resistance after 200 cycles can be controlled to be 13.6% or less, and the increase rate of the internal resistance after 2000 cycles can be controlled to be 33.78% or less.

As can also be seen from the comparison of the data of Examples 12 to 15 and Examples 32 and 33, when the aspect ratio m of the positive electrode plate and the compaction density ρ of the positive electrode active material layer remain unchanged, as the mass proportion of the single crystal particles of the positive electrode active material increases, the increase rates of the internal resistance after 200 and 2000 cycles show a gradually decreasing trend.

As can be seen from the comparison of the data of Example 1, Example 4, Example 9, and Example 12, Example 6, Example 10, and Example 13, and Example 8, Example 11, and Example 14, as the aspect ratio m of the positive electrode plate gradually increases or the compaction density ρ of the positive electrode active material layer gradually increases, the improvement in the increase rate of the internal resistance by the single crystal particles with the same mass proportion gradually decreases.

As can be seen from the comparison of Examples 12 to 15, when m × ρ is increased to 6.6, the increase rate of the internal resistance can be significantly improved only when the mass proportion of the single crystal particles is a large value. In addition, when the positive electrode active material is controlled to be pure single crystal particles, the increase rate of the internal resistance after 200 cycles can be controlled to be about 5%, and the increase rate of the internal resistance after 2000 cycles can be controlled to be about 17.5%.

As can be seen from the comparison of Examples 15 to 21, when m × ρ is increased to 6.6 or higher, the improvement effect of the positive electrode active material of the pure single crystal particles on the increase rate of the internal resistance is gradually weakened. When m × ρ is 15 or less, the increase rate of the internal resistance after 200 cycles can be controlled to be 7.7% or less, and the increase rate of the internal resistance after 2000 cycles can be controlled to be 25.7% or less.

As can be seen from the comparison between Example 20 and Examples 22 and 23, as the total length W1 of the joint between the single positive electrode plate and the at least one corresponding positive electrode tab gradually increases, the increase rate of the internal resistance shows a gradually decreasing trend. In addition, when W1 = W, the increase rate of the internal resistance after 200 cycles can be controlled within 20.8%, and the increase rate of the internal resistance after 2000 cycles can be controlled to be 57.7% or less.

As can be seen from the comparison between Example 22 and Example 24, as the number of tabs increases, the increase rate of the internal resistance shows a decreasing trend.

As can be seen from the comparison between Example 12 and Examples 25 to 27, as the nickel content of the positive electrode active material increases, the volumetric energy density assembly of the battery increases. In addition, when the nickel content is 85% or higher, the volumetric energy density of the battery is 772.4 Wh/L or higher.

As can be seen from the comparison between Example 12 and Examples 28 to 32, the volumetric energy density of the battery can be improved by adding silicon-carbon composite to the negative electrode active material. In addition, as the amount of silicon-carbon composite in the negative electrode active material increases, the volumetric energy density of the battery gradually increases.

The above are only specific embodiments of the present application and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A lithium-ion battery, wherein the lithium-ion battery comprises positive electrode plates, an aspect ratio m of each positive electrode plate satisfies 1 ≤ m ≤ 6, the positive electrode plate comprises a positive electrode active material layer, a compaction density ρ of the positive electrode active material layer satisfies 3.3 g/cm³ ≤ ρ ≤ 3.7 g/cm³, the positive electrode active material layer comprises a positive electrode active material, the positive electrode active material comprises single crystal particles, a mass proportion of the single crystal particles in the positive electrode active material is not less than 50%, and a porosity of the positive electrode active material layer ranges from 23% to 33%.

2. The lithium-ion battery according to claim 1, wherein an aspect ratio m of the positive electrode plate and a compaction density ρ of a positive electrode active material layer in units of g/cm³ satisfy m × ρ ≥ 3.

3. The lithium-ion battery according to claim 2, wherein an aspect ratio m of the positive electrode plate and a compaction density ρ of a positive electrode active material layer in units of g/cm³ satisfy 3 ≤ m × ρ < 5, the positive electrode active material comprises single crystal particles and polycrystalline particles, and a mass proportion of the polycrystalline particles in the positive electrode active material is less than or equal to 50%.

4. The lithium-ion battery according to claim 3, wherein an aspect ratio m of the positive electrode plate and a compaction density ρ of a positive electrode active material layer in units of g/cm³ satisfy 3 ≤ m × ρ < 5, the positive electrode active material comprises single crystal particles and polycrystalline particles, and a mass proportion of the polycrystalline particles in the positive electrode active material is less than or equal to 30%.

5. The lithium-ion battery according to claim 2, wherein an aspect ratio m of the positive electrode plate and a compaction density ρ of a positive electrode active material layer in units of g/cm³ satisfy m × ρ ≥ 5, and the positive electrode active material is a single crystal particle.

6. The lithium-ion battery according to claim 5, wherein an aspect ratio m of the positive electrode plate and a compaction density ρ of a positive electrode active material layer in units of g/cm³ satisfy 15 ≥ m × ρ ≥ 5, and the positive electrode active material is a single crystal particle.

7. The lithium-ion battery according to any one of claims 1 to 6, wherein the lithium-ion battery further comprises positive electrode tabs, each positive electrode plate is connected to at least one positive electrode tab, and a total length W1 of a joint between a single positive electrode plate and at least one corresponding positive electrode tab and a width W of the positive electrode plate satisfy: W ≤ W1.

8. The lithium-ion battery according to any one of claims 1 to 6, wherein the lithium-ion battery further comprises a shell body, and a relationship between a total thickness T1 of positive electrode active material layers of all positive electrode plates in the lithium-ion battery and a width W2 of an inner cavity of the shell body satisfies that T1:W2 ranges from 35% to 45%; and/or
the positive electrode plate comprises a positive electrode current collector, and a thickness of the positive electrode current collector is greater than or equal to 8 µm.

9. The lithium-ion battery according to any one of claims 1 to 6, wherein the positive electrode active material comprises LiₓNiₐCo_{b}M_{c}O_{2-y}A_{y}, x ranges from 0.2 to 1.2, 0.8 ≤ a < 1, 0 ≤ b ≤ 0.2, a + b + c = 1, 0 ≤ y < 0.2, M comprises Al and/or Mn, and A comprises at least one of S, N, F, Cl, Br, and I.

10. The lithium-ion battery according to any one of claims 1 to 6, wherein a mass content of Ni on a surface of the single crystal particles is lower than a mass content of Ni inside the single crystal particles; and/or
the positive electrode active material comprises polycrystalline particles, and a mass content of Ni on a surface of primary particles in the polycrystalline particles is lower than a mass content of Ni inside the primary particles.

11. The lithium-ion battery according to any one of claims 1 to 6, wherein the single crystal particles comprise large single crystal particles and small single crystal particles, a median particle size Dv50 of the large single crystal particles ranges from 5 µm to 10 µm, and a median particle size Dv50 of the small single crystal particles ranges from 1 µm to 3.5 µm; and/or
a particle size distribution SPAN value of the single crystal particles ranges from 1.0 to 2.0; and/or
a Dv2 of the single crystal particles is greater than 0.7 µm.

12. The lithium-ion battery according to any one of claims 1 to 6, wherein the lithium-ion battery further comprises negative electrode plates, each negative electrode plate comprises a negative electrode active material layer, the negative electrode active material layer comprises graphite and a silicon material, and a mass of the silicon material accounts for 5% to 15% of a mass of the graphite.

13. The lithium-ion battery according to claim 12, wherein the silicon material comprises at least one of silicon oxide, silicon-carbon composite, and pre-lithiated silicon; and/or
a median particle size Dv50 of the silicon material ranges from 6 µm to 15 µm.

14. The lithium-ion battery according to claim 12, wherein the negative electrode plate comprises a negative electrode current collector, the negative electrode active material layer is attached to the negative electrode current collector, the negative electrode active material layer comprises a first negative electrode active material layer and a second negative electrode active material layer, the first negative electrode active material layer is disposed between the negative electrode current collector and the second negative electrode active material layer, and the silicon material is provided in the second negative electrode active material layer; and/or
a compaction density of the negative electrode active material layer is less than or equal to 1.70 g/cm³.

15. A lithium-ion battery, wherein the lithium-ion battery comprises positive electrode plates, positive electrode tabs, a shell body, and negative electrode plates, each positive electrode plate comprises a positive electrode active material layer, the positive electrode active material layer comprises a positive electrode active material, an aspect ratio m of the positive electrode plate and a compaction density ρ of a positive electrode active material layer in units of g/cm³ satisfy m × ρ ≥ 3, the positive electrode active material comprises single crystal particles, and a mass proportion of the single crystal particles in the positive electrode active material is not less than 50%; each positive electrode plate is connected to at least one positive electrode tab, and a total length W1 of a joint between a single positive electrode plate and at least one positive electrode tab and a width W of a positive electrode plate satisfy: W ≤ W1; a relationship between a total thickness T1 of positive electrode active material layers of all positive electrode plates in the lithium-ion battery and a width W2 of an inner cavity of the shell body satisfies that T1:W2 ranges from 35% to 45%; each negative electrode plate comprises a negative electrode active material layer, the negative electrode active material layer comprises graphite and a silicon material, and the silicon material accounts for 5% to 15% of the graphite.

16. An electric device, wherein the electric device comprises the lithium-ion battery according to any one of claims 1 to 15.
